# EUROPÄISCHE PATENTSCHRIFT

(11) **EP 0 843 156 B1**
(45) Veröffentlichungstag und Bekanntmachung des Hinweises auf die Patenterteilung: **11.06.2003**
(21) Anmeldenummer: 97117917.1
(22) Anmeldetag: 16.10.1997
(51) Int. Cl.: G01B 11/10, G01B 11/06, B21B 38/04

(54) **Verfahren und Vorrichtung zur Messung der Dicke von unrunden länglichen und in Richtung ihrer Längsachse vorgeschobenen Werkstücken mit beliebig und sich ändernder Winkellage**
Procedure and device for measuring the thickness of non-round, elongated objects, moving longitudinally, under random and variable angles
Procédé et dispositif pour mesurer l'epaisseur d'objets non-ronds et longitudinaux en mouvement longitudinal sous d'angles aléatoires et non-fixes

(30) Priorität: 18.11.1996 DE 19647613
(43) Veröffentlichungstag der Anmeldung: 20.05.1998
(73) Patentinhaber: LAP GmbH Laser Applikationen, D-21337 Lüneburg (DE)
(72) Erfinder: Hofmann, Karsten, 21354 Bleckede (DE); Steinfadt, Henning, 21337 Lüneburg (DE)
(74) Vertreter: Patentanwälte Hauck, Graalfs, Wehnert, Döring, Siemons, Schildberg

(56) Entgegenhaltungen:
- EP-A- 0 549 914
- DE-A- 3 933 912
- GB-A- 2 121 956
- US-A- 3 870 890
- US-A- 4 121 292

## Beschreibung

Die Erfindung bezieht sich auf ein Verfahren und eine Vorrichtung zur Messung der Dicke von unrunden länglichen und in Richtung ihrer Längsachse vorgeschobenen Werkstücken beliebiger und sich ändernder Winkellage.

Es ist Stand der Technik, in Walzwerken für Flachprodukte (Grobblech, Warmband) die Walzspalteinstellung über ein geschlossenes Regelsystem vorzunehmen. Zu diesem Zweck wird hinter dem letzten Walzgerüst ein Meßsystem angeordnet, welches kontinuierlich die Dicke und ggf. die Planität des gewalzten Produktes mißt und somit den Istwert für das Regelsystem zur Verfügung stellt, welches dann über entsprechende Aktoren die Walzspalthöhe und die Walzspaltgeometrie einstellt im Hinblick auf Maßhaltigkeit und Ebenheit des Produktes.

Es ist angestrebt, in Walzstraßen für Rundprodukte ebenfalls geschlossene Regelsysteme anwenden zu können. Bisher scheiterte dieses Vorhaben daran, daß es an einem Meßsystem mangelte, welches mit hoher Meßrate die wahre Höhe und Breite des Walzstabes unabhängig von jeder möglichen Verdrallung mißt.

Es ist bekannt, in Draht- und Stabstahlwalzwerken oszillierende oder rotierende einachsige Meßsysteme oder zweiachsige Meßsysteme mit einstellbarer Winkellage zu verwenden. Zwar ist das rotierende Meßsystem in der Lage, bis zu vier an beliebig wählbaren Winkelpositionen gemessene Durchmesserwerte als Istwerte auszugeben. Weicht jedoch durch den Drall bedingt die Lage von wahrer Höhe und Breite des Stabes von der einmal definierten Winkelposition ab, werden unzutreffende Meßwerte ausgegeben. Für eine geschlossene Regelschleife kann daher ein derartiges Meßverfahren nicht verwendet werden.

Aus DE 39 33 912 ist ein Verfahren zur Erkennung der Breite und des Drallwinkels beim Walzen runder Querschnitte bekannt. Bei dem Verfahren wird durch den Einsatz eines oszillierend bzw. rotierend um das Meßgut bewegte Pyrometers der Temperaturverlauf entlang dem Umfang aufgenommen und gleichzeitig eine Dickenmessung in zwei orthogonal zueinander stehenden Ebenen vorgenommen.

Bei einem anderen bekannten Meßsystem werden zwei rechtwinklig zueinander angeordnete Meßsysteme mit gemeinsam einstellbarer Winkellage vorgesehen. Ein derartiges Meßsystem wäre für eine Regelung einsatzfähig, wenn der Drall des Walzgutes bekannt und konstant wäre. Mit dem bekannten Meßsystem läßt sich innerhalb kürzester Zeit die gesamte Kontur des Walzgutes ermitteln. Eine Bedienungsperson könnte dann aus dem Diagramm die Lage von Höhen- und Breitenachse des Walzgutes ermitteln und den Meßkopf in dieser Lage feststellen. Nachteilig wäre hierbei jedoch, daß keine Unterscheidung zwischen einer Änderung des Füllgrades des Walzenkalibers und einer Verdrallung des Walzgutes möglich ist. Würde sich nämlich bei gleichbleibender Unterfüllung der Drallwinkel ändern, würde die gemessene Breite sich scheinbar vergrößern, wenn das Meßsystem anfangs in der optimalen Lage war. Der Meßwertanstieg würde jedoch zu einem völlig falschen Regelverhalten des Gesamtsystems führen. Umgekehrt würde ein Rückdrehen des Stabes aus einer falschen in die richtige Lage eine scheinbare Verringerung der Breite zur Folge haben, wiederum mit falscher Reaktion der Regelung als Konsequenz.

Ein weiteres bekanntes Verfahren verwendet ein einachsiges Meßsystem, welches an wählbaren Winkeln positioniert wird, beispielsweise auf die Breite eines verdrallten Stabes. Im Falle eines Meßwertanstiegs führt das Meßsystem eine kleine Vorwärts- und Rückwärtssuchbewegung aus, um festzustellen, ob eine tatsächliche Füllgradänderung vorliegt, die den Meßwertanstieg verursacht oder lediglich eine Veränderung des Drallwinkels. Falls letzteres zutrifft, wird das Meßsystem auf dem Winkel positioniert, an dem das Durchmesserminimum gemessen wurde. Auch ein derartiges Meßsystem ist für eine Regelung nicht geeignet, da bei einer Änderung des Drallwinkels der gemessene Istwert im Takt der Suchbewegung oszilliert.

Der Erfindung liegt die Aufgabe zugrunde, ein Verfahren und eine Vorrichtung zur Messung der Dicke von unrunden länglichen und in Richtung ihrer Längsachse vorgeschobenen Werkstücken mit beliebigen und sich ändernden Winkellagen zu schaffen, um bei drallwinkelunabhängigen Meßwerten eine hohe Meßrate zu gewährleisten, so daß die Erfindung vor allen Dingen für den Einsatz in Regelsystemen geeignet ist.

Diese Aufgabe wird erfindungsgemäß durch die Merkmale der Patentanspruche 1 und 8 gelöst.

Bei dem erfindungsgemäßen Verfahren werden simultan mit Hilfe von drei Meßsystemen, die um die Längsachse des Werkstücks gemeinsam verschwenkt werden, für drei um kleine Winkel zueinander versetzte Meßachsen (Haupt-und Nebenachsen) über einen vorgegebenen Schwenkwinkelbereich die Dickenwerte des Werkstücks gemessen. Dieser Vorgang, der auch als Suchlauf bezeichnet werden kann, ermöglicht die Dickenmessung zum Beispiel über einen Winkel von ± 45%, wobei der Suchlauf in einer vorgegebenen Nullage beginnt und zunächst in der einen und dann in der anderen Drehrichtung erfolgt. Über einen Winkel von 90° kann zum Beispiel mit dem mittleren Meßsystem (Hauptachse) eine Durchmesserbestimmung des Werkstücks durchgeführt und somit auch die Kontur über diesen Bereich bestimmt werden. Aus den Meßwerten, beispielsweise für die Hauptachse, kann mit Hilfe eines Rechners die Größe und Winkellage eines Minimum- bzw. eines Maximumwerts ermittelt werden. Die Meßsysteme werden dann gemeinsam in eine Winkelposition verschwenkt, in der die Meßwerte des mittleren Meßsystems (d.h. für die Hauptachse) annähernd ein Minimum bzw. ein Maximum ergeben. Während des weiteren Vorschubs des Werkstücks, beispielsweise eines Walzstabes, erfolgt eine Durchmessermessung in der eingenommenen Position (Null-Meßposition). Ändert sich zum Beispiel der in der Hauptachse gemessene Durchmesser, kann dies dadurch verursacht sein, daß aufgrund der Regelschleife eine Kompensation erfolgt ist, beispielsweise die vermehrte Auffüllung des Walzenkalibers. Andererseits kann eine Meßwertänderung auch dadurch zustande gekommen sein, daß - gegenüber der Meß-Nullposition - ein Drall des Walzstabes stattgefunden hat. Ohne zusätzliche Maßnahmen können diese Phänomene nicht diskriminiert werden. Erfindungsgemäß ist daher im Rechner ein Algorithmus vorgesehen, mit dem die Meßwerte aus den drei Meßsystemen zueinander in Beziehung gesetzt werden. Es läßt sich errechnen, in welchem Maß sich die Winkellage des tatsächlichen Minimums oder Maximums, in welcher Drehrichtung verändert hat. Ferner läßt sich daraus die Größe des wahren Minimums oder Maximums bestimmen. Innerhalb eines begrenzten Winkelbereichs (Fangbereich), in dem das wahre Minimum oder Maximum gegenüber der Meßnullage gewandert sein kann, sind die Beziehungen der Meßwerte aller drei Meßsysteme vorgegeben und mathematisch ermittelbar. Innerhalb dieses sogenannten Fangbereichs, der zum Beispiel ± 3° betragen kann bei einem Winkelversatz der Achsen der drei Meßsysteme von 5°, kann dann rechnerisch das wahre Minimum oder Maximum bestimmt werden, ohne daß es eines Nachführens der Meßsysteme bedarf. In diesem Fall stellt dann das errechnete Minimum bzw. Maximum den Istwert für ein Regelsystem zur Verfügung. Außerhalb des Fangbereichs, der bei einem im Querschnitt annähernd kreisrunden Werkstück beginnt, wenn ein Nebenmeßsystem einen konstanten Wert produziert, lassen sich die mathematischen Beziehungen nicht mehr eindeutig ermitteln. Es ist dann erforderlich, die Meßsysteme nachzuführen. Daher sieht eine Ausgestaltung der Erfindung vor, daß die Meßsysteme aus der Meßnullage um ein vorgegebenes Maß in Richtung der Veränderung der Winkellage des tatsächlichen Minimums bzw. Maximums verschwenkt werden, wenn die Veränderung einen vorgegebenen Wert erreicht hat. Dieser vorgegebene Wert kann zum Beispiel die halbe Breite eines Fangbereichs betragen, im angegebenen Beispiel etwa 3°.

Mit Hilfe des erfindungsgemäßen Verfahrens läßt sich auch die Änderung der Durchmesserwerte über den Drehwinkel errechnen, d.h. um den sich das Minimum oder Maximum geändert hat. Auf diese Weise läßt sich auch die Kontur des Werkstücks über den Drehwinkelbereich erfassen. Bei der Anwendung auf Rundwalzstäbe ist dies zum Beispiel wesentlich, um einen Walzenversatz zu erkennen. Haben die Walzrollen einen bestimmten Versatz, führt dies bekanntlich zu zwei im Querschnitt zueinander versetzten Halbschalen. Ähnlich läßt sich ein Walzenverschleiß ermitteln, der bekanntlich als Vertiefung, insbesondere in den Kaliberflanken oder Kaliberschultern auftritt.

Es wurde bereits erwähnt, daß der Suchlauf von einer Nullposition in entgegengesetzten Drehrichtungen jeweils um einen vorgegebenen Winkel erfolgt. Tritt das gemessene Minimum oder Maximum versetzt gegenüber der Ausgangs-Nulllage auf, dann hängt es von der Drehrichtung der Meßsysteme zu Beginn des Suchlaufs ab, wie lang der gesamte Winkelweg ist bis zur Positionierung des Meßsystems, bei dem das Minimum oder Maximum der Meßwerte des Hauptmeßsystems in der Mitte des Fangbereichs liegt (Null-Meßlage). Daher sieht eine Ausgestaltung der Erfindung vor, daß der Suchlauf über den vorgegebenen Winkelbereich zu der Richtung hin beginnt, die derjenigen entgegengerichtet ist, um die sich die Winkellage des Minimums oder Maximums der Meßwerte verschoben hat. Auf diese Weise wird eine Wegoptimierung für den Suchlauf erreicht und damit eine Verkürzung der Positionierdauer.

Nach einer weiteren Ausgestaltung der Erfindung können mit Hilfe einer vierten Meßvorrichtung vierte Meßwerte gemessen werden, und zwar entlang einer Meßachse, die orthogonal zur Achse des mittleren der drei Meßsysteme verläuft (Hauptachse). Die vierten Meßwerte werden mit den Meßwerten entlang der Hauptachse in Beziehung gesetzt. Dies ist zum Beispiel gewünscht, wenn die Maßhaltigkeit der Kalibereinstellung überprüft werden soll.

Es kann und soll im Verlaufe der Messung vorkommen, daß Meßwerte erzeugt werden, die. nicht mehr auswertbar sind, d.h. die gewünschte Kontur, beispielsweise die runde Kontur, ist annähernd erreicht. Daher sieht eine Ausgestaltung der Erfindung vor, daß ein neuer Suchlauf vorgenommen wird, wenn über eine vorgegebene Zeit die Meßwerte aller Meßachsen annähernd gleich sind. Der weitere Suchlauf schließt jedes Risiko einer Fehlpositionierung aus.

Zur Durchführung des erfindungsgemäßen Verfahrens sieht die Erfindung eine Vorrichtung nach Anspruch 8 vor. Diese enthält drei Dickenmeßsysteme, die in Achsrichtung des Werkstücks beabstandet und um einen kleinen Winkel in Umfangsrichtung gegeneinander versetzt sind. Die Meßsysteme sind auf einer gemeinsamen Halterung angeordnet, die um die Längsachse des Werkstücks schwenkbar gelagert ist. Außerdem ist ein Winkelpositionierantrieb für die Halterung vorgesehen. Für die Dickenmessung können alle herkömmlichen Meßsysteme in Betracht kommen. Besonders vorteilhafte Meßsysteme arbeiten nach dem Schattenprojektionsverfahren oder als Laser-Scan-Mikrometer. Grundsätzlich ist allen bekannten Dickenmeßsystemen gemeinsam, daß sie einen Sender und einen Empfänger haben, die einander diametral gegenüberliegen. Der Winkelpositionierantrieb ist erforderlich, um den Suchlauf durchzuführen sowie die Verschwenkung auf die Winkelposition, in der das tatsächliche Minimum oder Maximum der Werte für die Hauptmeßsysteme auftreten (Fangbereich). Außerdem bewirkt der Antrieb das Nachführen der Meßsysteme, sobald der oben erwähnte Fangbereich verlassen wird.

Der Winkel zwischen Haupt- und Nebenachsen der Meßsysteme beträgt vorzugsweise 2 bis 10°. Werte außerhalb dieses Winkelbereichs lassen sich üblicherweise nicht verwerten.

Mit dem erfindungsgemäßen Verfahren bzw. der erfindungsgemäßen Vorrichtung lassen sich auf einfache Weise der Drallwinkel und seine Richtung ermitteln sowie durch die Messung der Steigung der Durchmesserwerte über den Drehwinkel die Kreisförmigkeit eines Stabes. Wie schon erwähnt, kann für einen vorgegebenen Winkelbereich (Abweichung Drall-Nullposition) eine mathematische Bestimmung des echten Minimums oder Maximums der Dicke erfolgen, so daß trotz Abweichung von der theoretisch richtigen Lage weiterhin lückenlos gültige Meßwerte erhalten werden, die zum Beispiel für eine Regelung eines Walzgerüsts zur Verfügung gestellt werden können. Weist die Veränderung des Drehwinkels des Walzgutes eine Tendenz zum Verlassen des Fangbereiches auf, wird die gesamte Meßanordnung durch Drehung nachgeführt, um auf jeden Fall zu gewährleisten, daß die Breitenachse innerhalb des Winkelbereiches der beiden Hilfs- oder Nebenachsen verbleibt.

Insbesondere bei der Regelung des Walzens von Stäben läßt sich auf einfache und sichere Weise eine Unter- oder Überfüllung nachregeln und der Walzenversatz oder der Walzenverschleiß ermitteln. Der Verlauf des Dralls für eine Reihe von Werkstücken kann gespeichert werden, um eine sogenannte Drallhistorie aufzuzeichnen. Darüber hinaus kann aus der Historie eine Vorhersage des Drallwertes durch Berechnung erfolgen, wenn keine mathematisch auswertbare Kontur vorliegt. Insgesamt kann der gesamte Prozeß von Konturmessung, mathematischer Auswertung und Positionierung auf den errechneten Winkel innerhalb kürzester Zeit erfolgen, d.h. längstens innerhalb von 3 Sekunden.

Die Erfindung wird nachfolgend anhand von Zeichnungen näher erläutert.
- Fig. 1: zeigt schematisch eine Dickenmeßanordnung für einen Stab mit Oval-Profil.
- Fig. 2: zeigt die Meßanordnung nach Fig. 1 für das um 90° gedrehte Oval-Profil.
- Fig. 3: zeigt schematisch eine Meßanordnung nach der Erfindung.
- Fig. 4: zeigt eine Grafik zur Verdeutlichung des Verlaufs der Meßwerte der drei Meßsysteme nach Fig. 1.
- Fig. 5: zeigt den Schnitt durch den Walzenspalt von zwei Walzen einschließlich des Walzstabes.

Die Erfindung wird anhand einer Walzspaltregelung erläutert. Es versteht sich jedoch, daß sie hierauf nicht beschränkt ist, sondern im Prinzip für die Kontur- oder Dickenregelung bei den im Anspruch 1 genannten Werkstücken verwendet werden kann.

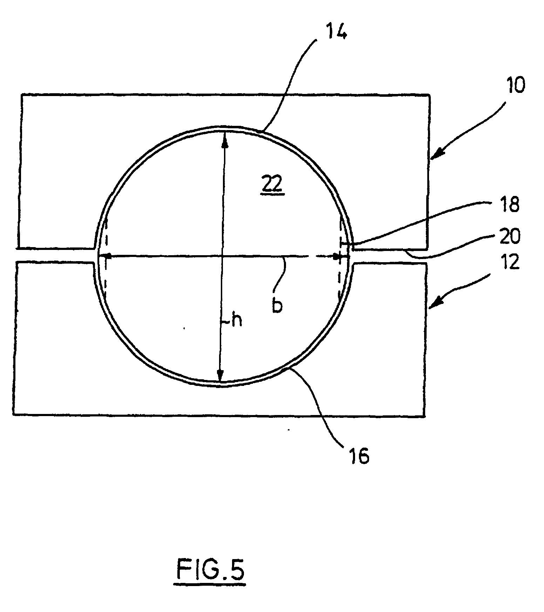

In Fig. 5 sind zwei Walzen 10, 12 eines Walzgerüstes zum Formen von Rundprofilen angedeutet mit halbkreisförmiger Profilierung 14 bzw. 16, die zusammen einen Walzenspalt in Kreisflächenform bilden. Beim Walzen wird die ideale Kreisform angestrebt, sie ist jedoch schwer zu verwirklichen. Entweder kommt es zu einer sogenannten Unterfüllung, d.h. die kreisförmige Querschnittsfläche wird nicht vollständig mit Material ausgefüllt. Dies ist durch die gestrichelten Linien 18 angedeutet. Oder es befindet sich im umgekehrten Fall zu viel Material zwischen den Rollen 10, 12, und das Material versucht, über den Spalt 20 zwischen den Rollen nach außen zu entweichen. Diese Erscheinung wird als Überfüllung bezeichnet. Im Idealfall sollen mithin Breite b des Stabes, der mit 22 bezeichnet ist, und Höhe h gleich sein. Abweichungen vom runden Profil entstehen auch, wenn die halbkreisförmigen Hohlprofile 14, 16 verschleißen und wenn die Walzen 10, 12 einen Versatz zueinander haben. Mit einem geeigneten Meßverfahren wird angestrebt, die erwähnten Abweichungen zu erfassen und durch Regelung am Walzgerüst bzw. der Vorschubgeschwindigkeit des Stabes 10 zu beseitigen, um ein möglichst rundes Profil zu erreichen.

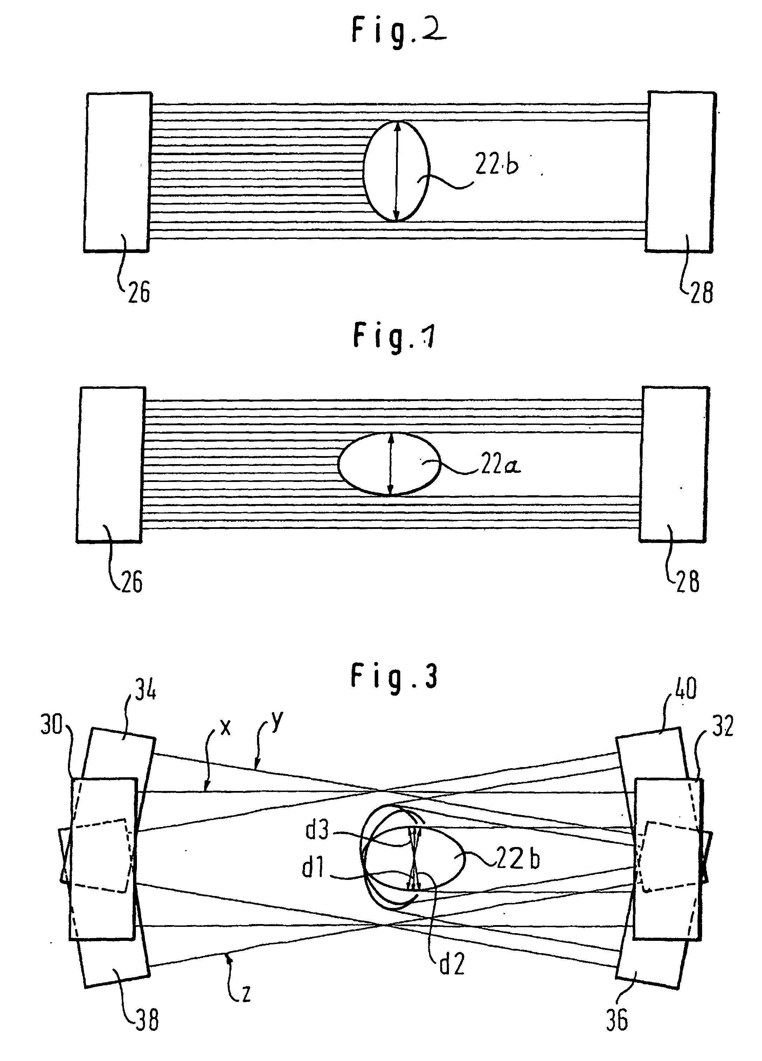

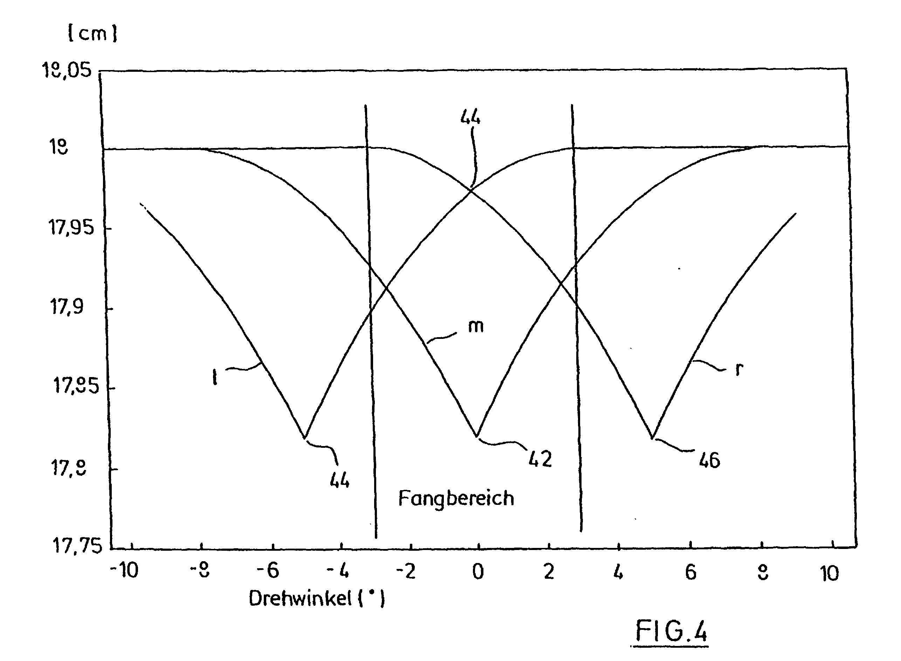

In Fig. 1 ist ein Walzstab 22a angedeutet, der im Querschnitt von der Kreisform abweicht. Die gezeigte Ovalität gibt zum Beispiel eine Unterfüllung wieder. Ein Durchmesser- oder Dickenmeßsystem, bestehend aus einem Sender 26 und einem Empfänger 28 bestimmt die Dicke des Stabes 22a, die der Höhe h in Fig. 5 entspricht. Die Dicken- oder Durchmessermeßvorrichtung kann nach dem Schattenprojektionsverfahren arbeiten, indem zum Beispiel der Sender 26 eine Lichtquelle ist, die parallele Lichtstrahlen auf den optischen Empfänger 28 wirft und letzterer die Länge des Schattens mißt, welche durch den Stab 22a verursacht wird. Alternativ kann auch ein Laserscanverfahren eingesetzt werden. Derartige Vorrichtungen sind seit langem Stand der Technik.

In Fig. 2 ist ein Walzstab 22b angedeutet, dessen Dicke ebenfalls durch die in Fig. 1 dargestellte Meßvorrichtung gemessen wird. Fig. 2 deutet zum Beispiel einen Unterfüllungszustand an.

In Fig. 3 sind drei Meßsysteme x, y und z angedeutet, von denen jedes aus einem Sender 30, 34, 38 und einem Empfänger 32, 36, 40 besteht entsprechend den Meßsystemen nach Fig. 1 oder Fig. 2. Das mittlere Meßsystem x mißt entlang einer Hauptachse, die senkrecht steht auf der Dicke d1 des Stabs 22b. Die Nebenachsen der Systeme y, z sind senkrecht zu den Dicken d2 bzw. d3. Die Meßsysteme x, y und z sind in Richtung der Längsachse des Stabes 22b versetzt zueinander, so daß sie sich gegenseitig nicht überlagern. Die Meßsysteme x, y, z sind auf einer gemeinsamen, nicht dargestellten Halterung angeordnet, die um eine Achse drehbar gelagert ist, die mit der Längsachse des Stabes 22b zusammenfällt. Die Halterung wird von einem ebenfalls nicht gezeigten Winkel-Positionierantrieb angetrieben, um die Anordnung aus den Meßsystemen x, y und z um vorgegebene relativ genau einstellbare Winkel zu verschwenken.

Aus der in Fig. 3 gezeigten Darstellung wird deutlich, daß jeder Empfänger 32, 36, 40 einen unterschiedlichen Meßwert für die Dicke des Stabes 22b ermittelt, repräsentiert durch die Dicken d1 bis d3. Wenn die Meßsysteme x, y und z gemeinsam gedreht werden, ergibt sich je nach der Winkellage der Meßsysteme zum Stab 22b ein sich jeweils ändernder Dickenwert. Dies ist in der Grafik nach Fig. 4 zu erkennen.

In Fig. 4 sind die Meßwertkurven der drei Meßsysteme x, y und z aufgetragen, wenn diese gemeinsam um einen Drehwinkel, hier von 0 nach -10° und von 0 nach +10° verschwenkt werden. Die in Fig. 4 aufgetragenen Meßkurven m, 1 und r geben jedoch nicht die Meßergebnisse wieder, wie sie durch den Stab 22b erzeugt werden, sondern durch den Stab 22a nach Fig. 1 oder in einer Lage des Stabes 22b um 90° verdreht bzw. in einer 90°-Verdrehung der Meßsysteme x, y und z. Dies ist daran zu erkennen, daß in einer Winkelposition der Meßsysteme x, y, z jeweils ein Minimum erzeugt wird, wie bei 42, 44 bzw. 46 angedeutet. Dies ist zum Beispiel der Fall, wenn die Hauptachse, d.h. die Achse des Meßsystems x senkrecht zur Dickenachse b in Fig. 5 gerichtet ist und eine Unterfüllung vorliegt. Der gewünschte ideale Dickenwert beträgt im gezeigten Fall in Fig. 4 zum Beispiel 18 cm. Hat der Stab über einen Winkel diese Dicke, ergibt sich unabhängig vom Schwenkwinkel ein konstanter Wert. Da die Meßsysteme x, y und z in einem Winkel zueinander angeordnet sind, beispielsweise zwischen 2 und 10°, wobei die Nebenmeßsysteme y und z vorzugsweise symmetrisch zum Hauptmeßsystem x liegen, ist klar, daß sich bei gemeinsamer Drehung der Meßsysteme ein minimaler Meßwert bei jeweils unterschiedlichem Drehwinkel einstellt. Im vorliegenden Fall ist der Drehwinkel, bei dem der Minimum-Meßwert 42 gemessen wird, mit Null angegeben. Dementsprechend liegen die minimalen Meßwerte für die Nebenmeßsysteme y und z bei 5°.

Bei 0° messen mithin die Meßsysteme x, y und z unterschiedliche Werte, wobei die Meßwerte der Meßsysteme y und z gleich sind. Bei einem Winkel abweichend von 0° ergeben sich bis auf einen Fall, der in Fig. 4 mit 2,5 bzw. -2,5 liegt, jeweils drei unterschiedliche Meßwerte. Es hat sich nun herausgestellt, daß zwischen den Meßwerten bei den einzelnen Drehwinkeln sich eine bestimmte mathematische Beziehung herleiten läßt. Sind zum Beispiel der Meßwert 42 und der sich aus der Kreuzung der Kurven l und r ergebende Meßwert 44 bekannt, kann durch entsprechende mathematische Beziehungen extrapoliert werden, wie die Meßwerte beschaffen sind, wenn die Meßsysteme x, y und z sich um einen begrenzten Winkelbereich drehen würden. Eine klare mathematische Aussage ist jedoch nur in einem begrenzten Winkelbereich möglich. In dem Augenblick, in dem die Meßwerte eines Meßsystems sich nicht mehr verändern, ergeben sich mathematisch Unbestimmtheiten. Der Bereich, in dem die Meßwerte der Meßsysteme x, y, z eine mathematische Beziehung haben, ist in Fig. 4 als Fangbereich bezeichnet.

Die Verknüpfung der Meßwerte der einzelnen Meßsysteme x, y und z ist insofern von Bedeutung, als bei einer Positionierung der Meßsysteme x, y und z in einem bestimmten Drehwinkel in der vom Hauptmeßsystem gemessenen Dicke eine Veränderung eintreten kann, aber nicht ersichtlich ist, ob diese daher rührt, daß aufgrund eines automatischen oder anderweitig willkürlichen Eingriffs die Parameter des Walzgerüsts verändert worden sind, zum Beispiel Verringerung der Unterfüllung oder ein Drall des Stabes 22b stattgefunden hat. Bei den beschriebenen Walzprozessen ist ein Drall normalerweise nicht vermeidbar. Er ist jedoch weder voraussehbar noch konstant und würde, wenn man ihn nicht berücksichtigen würde, zu einer Verfälschung der Meßergebnisse führen, was eine Regelung des Walzgerüstes verhindert, da eine zufriedenstellende Regelung nur dann erreicht werden kann, wenn die erzeugten Istwerte keine Scheinistwerte sind.

Bei einer Verringerung des Unterfüllungsgrades wird etwa das Meßwertminimum 42 geringer, d.h. der Meßwert 42 nähert sich dem Idealmeßwert 18 cm an. Dies führt jedoch nicht zu einer wesentlichen Änderung der Meßwerte 44. Bei einem Drall hingegen würde das Minimum ebenfalls eine ähnliche Annäherung zum Idealmeßwert 18 cm erfahren, gleichzeitig würde es jedoch zu einer signifikanten Änderung der Meßwerte der Meßsysteme y, z kommen, wie durch Betrachtung der Kurven in Fig. 4 deutlich wird. Bei einer Abweichung von 1°, d.h. bei einem Drallwinkel von 1°, liegen die Meßwerte der Kurven 1 und r deutlich auseinander, und zwar bei -1° ist der Meßwert für die Kurve r größer als für die Kurve 1 und bei einem Drallwinkel von +1° ist der Meßwert der Kurve 1 größer als der der Kurve r. Durch einen entsprechenden Algorithmus in einem Rechner, in den die Meßwerte der Meßsysteme x, y und z gegeben werden, läßt sich daher aus dem Bezug der Meßwerte ermitteln, in welcher Richtung ein Drall stattgefunden hat und welches Ausmaß er hat. Wenn der Drall ein bestimmtes Ausmaß erreicht hat, der im vorliegenden Fall zum Beispiel größer ist als 3°, dann ist erforderlich, die Meßsysteme x, y, z nachzuführen dergestalt, daß das Minimum 42 erneut annähernd in der Mitte des Fangbereiches liegt. Die erfolgte Verschwenkung der Meßsysteme kann winkelmäßig erfaßt werden. Sie gibt mithin den Drallwinkel des Stabes 22b an.

Beim Verfahren zur Regelung der Kalibrierung von Walzstäben werden die Meßsysteme x, y, z zum Beispiel so ausgerichtet, daß, wie erwähnt, die Hauptachse senkrecht zur Dicke b des Walzstabes liegt, was bei einer Unterfüllung bedeutet, daß das Minimum der Meßwerte etwa in der Mitte des Fangbereiches liegt, wie in Fig. 4 angedeutet. Bei der Regelung des Profils von Walzstäben wird angestrebt, eher eine Unterfüllung als eine Überfüllung zu erhalten. Beim Anlauf des Prozesses kann jedoch sofort ein Drall eintreten, so daß die beschriebene Ausrichtung nicht die ideale Meßlage angibt. Daher erfolgt zu Beginn zunächst ein sogenannter Suchlauf, bei dem die Meßsysteme x, y und z ausgehend etwa von einem Drehwinkel Null nach links und rechts jeweils um einen Winkel von zum Beispiel 45° schwenken. Es ergibt sich dann der Verlauf der Meßwerte entsprechend der Kurven m, l und r nach Fig. 4. Im Normalfall wird jedoch, wie erwähnt, das Minimum 42 nicht in der Mitte des Fangbereichs liegen. Für die dann anzufahrende Meßposition der Meßsysteme x, y, z werden die Meßsysteme x, y, z so weit gedreht, daß das Minimum 42 (Meßsystem x) im Fangbereich liegt. Durch den beschriebenen Vorgang können daher mehrere Parameter ermittelt werden, nämlich Erfassung der Gesamtkontur nach Einlauf des Stabes. Daraus läßt sich bestimmen, ob ein Walzenversatz vorliegt oder ein Walzenverschleiß, der ein Auswechseln einer Walze erfordert. Außerdem kann der Drallwinkel bestimmt werden. Während des weiteren Vorschubs des Stabes wird durch eine entsprechende nicht gezeigte Regelung versucht, die Unterfüllung zu minimieren bzw. die Kontur des Stabes der Kreisform anzunähern. Aufgrund des Verhaltens der Meßergebnisse kann nun unterschieden werden, ob eine Änderung der Meßwerte des Hauptmeßsystems x aufgrund der Regelung oder durch einen weiteren Drall des Stabes zustande gekommen ist.

Der Prozeß der beschriebenen Konturmessung, einschließlich der mathematischen Auswertung und Positionierung der Meßsysteme x, y und z beim Einlauf jedes neuen Stabes erfordert höchstens 3 Sekunden. In diesem Prozeß ist auch eine Wegoptimierung möglich, d.h. den Weg, den das Meßsystem nach dem Suchlauf zurücklegen muß, um in die bezüglich der Verdrallung bestimmte Nullposition zu fahren, kann so klein wie möglich gehalten werden, wenn vorher bekannt ist, auf welcher Seite der ursprünglichen Ausgangs-Nullstellung der Drall liegt. Normalerweise wird sich der Drall vom einen zum nächstfolgenden Stab nicht so stark verändern, daß er in einem Fall einen positiven und im anderen Fall einen negativen Winkel hat. Dementsprechend beginnt der Suchlauf, d.h. die Rotation der Meßsysteme x, y, z dergestalt, daß zunächst in die dem (hypothetischen) Drallwinkel entgegengesetzte Richtung verschwenkt wird, da nach Beendigung des Suchlaufs ein kürzerer Schwenkwinkel zurückgelegt werden muß, um in die Meßnullstellung zu gelangen als im umgekehrten Fall.

Es kann und soll im Verlauf des Walzprozesses, wie erwähnt, eine Kontur entstehen, die letztlich für den Nachführalgorithmus nicht mehr auswertbar ist, nämlich eine möglichst perfekte runde Kontur. In diesem Fall verbleiben die Meßsysteme x, y und z für eine wählbare Zeitdauer in der zuletzt gültigen Position. Tritt innerhalb dieses Zeitraums keine meßbare Unter- oder Überfüllung auf, kann ein weiterer Suchlauf durchgeführt werden, um jedes Risiko einer Fehlpositionierung auszuschließen.

## Patentansprüche

1. Verfahren zur Messung der Dicke von unrunden länglichen und in Richtung ihrer Längsachse vorgeschobenen Werkstücken mit beliebigen und sich ändernden Winkellagen, mit folgenden Verfahrensschritten:
Es werden simultan mit Hilfe von drei Meßsystemen, die um die Längsachse des Werkstücks und somit in dessen Umfangsrichtung schwenkbar an einer gemeinsamen Halterung angeordnet sind, entlang der drei um kleine Winkel zueinander versetzten Meßachsen über einen vorgegebenen Schwenkwinkelbereich die Dickenwerte des Werkstücks gemessen;
Die Dickenmeßwerte werden in einen Rechner gegeben, der daraus Minimum- oder Maximumwerte ermittelt;
Die Halterung wird in eine Meßnullage verschwenkt, in der das mittlere Meßsystem annähernd ein Minimum oder ein Maximum für die Dickenwerte ergibt, und
mit Hilfe eines auf einem Rechner ablaufenden Algorithmus wird aus den jeweiligen drei Dickenmeßwerten der drei Meßsysteme errechnet, in welchem Maße sich die Lage des Minimumwertes oder des Maximumwertes in Umfangsrichtung verändert, wie groß das Minimum oder das Maximum in der veränderten Lage in Umfangsrichtung ist und in welcher Drehrichtung die Veränderung der Lage in Umfangsrichtung stattgefunden hat.

2. Verfahren nach Anspruch 1, **dadurch gekennzeichnet, daß** die Meßsysteme mit der Halterung aus der Meßnullage um ein vorgegebenes Maß in Richtung der Veränderung der Lage des Minimums bzw. Maximums in Umfangsrichtung verschwenkt werden, wenn die Veränderung einen vorgegebenen Winkelbetrag erreicht hat.

3. Verfahren nach Anspruch 1 und 2, **dadurch gekennzeichnet**, das mit Hilfe des Algorithmus auch die Änderung der Dickenwerte über den Drehwinkel errechnet wird, um den sich das Minimum oder Maximum geändert hat.

4. Verfahren nach einem der Ansprüche 1 bis 3, **dadurch gekennzeichnet, daß** der vorgegebene Schwenkwinkelbereich in einem Suchlauf über einen Winkelbereich ± 45° erfolgt ausgehend von einer Ausgangs-Nullage.

5. Verfahren nach einem der Ansprüche 1 bis 4, **dadurch gekennzeichnet, daß** der vorgegebene Schwenkwinkelbereich in einem Suchlauf für alle einem ersten Werkstück nachfolgenden Werkstücke zu der Richtung hin beginnt, die derjenigen entgegengerichtet ist, in die sich die Lage des Minimums oder Maximums in Umfangsrichtung hin verschoben hat.

6. Verfahren nach einem der Ansprüche 1 bis 5, **dadurch gekennzeichnet, daß** vierte Meßwerte für die Dicke des Werkstücks von einem vierten Meßsystem gemessen werden, dessen Meßachse orthogonal zur Achse des mittleren der drei Meßsysteme verläuft und die Meßwerte im Rechner mit den Meßwerten der übrigen Meßsysteme in Beziehung gesetzt werden.

7. Verfahren nach einem der Ansprüche 1 bis 6, **dadurch gekennzeichnet, daß** ein neuer Suchlauf vorgenommen wird, wenn über einen vorgegebenen Zeitraum die Beziehung der Meßwerte annähernd gleich ist.

8. Vorrichtung zur Durchführung des Verfahrens nach einem der Ansprüche 1 bis 7,
mit drei Dickenmeßsystemen (x, y, z), deren Meßachsen um einen kleinen Winkel in Umfangsrichtung des Werkstücks (22b) gegeneinander versetzt sind,
einer gemeinsamen Halterung für die Meßsysteme (x, y, z), die um die Längsachse des Werkstücks (22b) und somit in dessen Umfangsrichtung schwenkbar gelagert ist,
einem Winkel-Positionierantrieb zur Drehung der Halterung und
einem Rechner, der so eingerichtet ist, daß er aus den jeweiligen drei Dickenmeßwerten der drei Meßsystem (x,y,z) Minimum - oder Maximumwerte ermiltelt und errechnet, in welchem Maß sich die Lage des Minimum-wertes oder des Maximumwertes in Umfangsrichtung verändert, wie groß das Minimum oder das Maximum in der veränderten Lage in Umfangsrichtung ist und in welcher Drehrichtung die Veränderung der Lage in Umfangsrichtung stattgefunden hat.

9. Vorrichtung nach Anspruch 8, **dadurch gekennzeichnet, daß** die Achsen von zwei Meßsystemen (y, z) symmetrisch zur Achse des dritten Meßsystems (x) angeordnet ist.

10. Vorrichtung nach Anspruch 8 oder 9, **dadurch gekennzeichnet, daß** die Winkel zwischen den zwei Meßsystemen (y,z) und dem dritten Meßsystem (x) zwischen 2° und 10° beträgt.

11. Vorrichtung nach einem der Ansprüche 8 bis 10, **dadurch gekennzeichnet, daß** ein viertes Meßsystem auf der Halterung angeordnet ist mit einer Meßachse, die orthogonal auf der Achse des dritten Meßsystems (x) steht.

## Claims

1. A method for measuring the thickness of non-circular elongated workpieces to be displaced in the direction of their elongation, which workpieces are in arbitrary and varying angular positions while they are being advanced, comprising the following method steps:
thickness values of the workpiece along three measuring axes offset with respect to each other for small angles are measured simultaneously within a predetermined angular range, by means of three measuring systems which are mounted to common frame means, rotatable about a longitudinal axis of the workpiece and thus in the circumferential direction thereof;
the measured thickness values are fed into a computer to determine minimal and maximum values thereof;
the frame means are rotated to a zero measuring position whereat the thickness values measured by the central measuring system are substantially at a minimum or, respectively, maximum; and
by an algorithm running on a computer for the three thickness values measured by the three measuring systems it is computed the degree for which the position of the minimum thickness value and the maximum thickness value changes in the circumferential direction, the amount of the minimum or the maximum value of the changed position in the circumferential direction and the direction of the change of the position in the circumferential direction.

2. A method as defined in claim 1, **characterized in that** the measuring systems are rotated together with the frame means from said zero measuring position for a predetermined amount in the direction of change of the angular position of the minimum or, respectively, the maximum when said change exceeds a predetermined angle.

3. A method as defined in claim 1 and 2, wherein the algorithm is used to compute the change of the thickness values associated with the change of the angular positions of the minimum or maximum values.

4. A method as defined in one of the claims 1 to 3, wherein said predetermined angular range of a search run is ± 45° from an initial measuring position.

5. A method as defined in one of the claims I to 4, wherein the search run for all workpieces following a first workpiece is directed opposite to the direction in which the angular position of the minimum value or maximum value was displaced.

6. A method as defined in one of the claims 1 to 5, wherein a fourth measuring system is used to measure additional thickness values for the workpiece, with the measuring axis of said fourth measuring system extending perpendicularly to the axis of said central measuring system, and the measured values in the computer are correlated to the thickness values measured by the other measuring systems.

7. A method as defined in one of the claims 1 to 6, wherein a new search run will be performed when the relationship of the measured values has remained substantially the same for a predetermined duration.

8. An apparatus for performing the method of one of the claims 1 to 7, comprising:
three measuring systems (x, y, z) which have measuring axes offset with respect to each other in a circumferential direction of the workpiece (22b) for small angles;
common frame means for the measuring systems mounted so as to be rotatable about the axis of elongation of the workpiece and thus in a circumferential direction thereof;
positioning drive means for rotating said common frame means; and
a computer so as to determine and compute from the actual three thickness values of the three measuring systems (x, y, z) minimum or maximum values.

9. An apparatus as defined in claim 8, wherein the axes of a pair of measuring systems (y, z) are symmetrically arranged with respect to said axis of said third measuring system (x).

10. An apparatus as defined in claim 8 or 9, wherein the third axis (x) includes an angle of about 2° to 10° with said axes of said two measuring systems (y, z).

11. An apparatus as defined in one of the claims 8 to 10, wherein said frame means carries a fourth measuring system having a measuring axis which is perpendicular to said third measuring system axis (x).

## Revendications

1. Procédé pour mesurer l'épaisseur d'objets ovalisés allongés et déplacés dans le sens de leur axe longitudinal sous des angles quelconques et variables, comprenant les étapes de procédé suivantes :
On mesure simultanément les valeurs d'épaisseur de l'objet à l'aide de trois systèmes de mesure disposés en pivotement autour de l'axe longitudinal de l'objet et donc dans le sens circonférentiel de celui-ci sur un support commun, le long des trois axes de mesure décalés les uns par rapport aux autres de petits angles, sur une plage angulaire de pivotement prédéterminée ;
Les valeurs d'épaisseur mesurées sont transmises à un calculateur qui en détermine des valeurs minimales ou maximales ;
Le support pivote dans une position de mesure zéro, dans laquelle le système de mesure central donne approximativement une minimale ou une maximale pour les valeurs d'épaisseur ; et
A l'aide d'un algorithme se déroulant sur un calculateur, on calcule à partir des trois valeurs d'épaisseur mesurées respectives, dans quelle mesure la position de la valeur minimale ou de la valeur maximale change dans le sens circonférentiel, la grandeur du minimum ou du maximum dans la position changée dans le sens circonférentiel et dans quel sens de rotation le changement de position dans le sens circonférentiel a eu lieu.

2. Procédé selon les revendications 1, **caractérisé en ce que** les systèmes de mesure avec le support pivotent depuis la position de mesure zéro d'une valeur prédéterminée dans le sens du changement de la position du minimum ou du maximum dans le sens circonférentiel, lorsque le changement a atteint une valeur angulaire prédéterminée.

3. Procédé selon les revendications 1 et 2, **caractérisé en ce qu'**à l'aide de l'algorithme on calcule également le changement des valeurs d'épaisseur sur l'angle de pivotement autour duquel le minimum ou le maximum a changé.

4. Procédé selon l'une quelconque des revendications 1 à 3, **caractérisé en ce que** la plage angulaire de pivotement prédéterminée se fait depuis une position initiale zéro par une recherche accélérée sur une plage angulaire de ± 45°.

5. Procédé selon l'une quelconque des revendications 1 à 4 **caractérisé en ce que** la plage angulaire de pivotement dans une recherche accélérée pour tous les objets suivant un premier objet commence dans la direction qui est opposée à celle dans laquelle la position du minimum ou du maximum s'est déplacée dans le sens circonférentiel.

6. Procédé selon l'une quelconque des revendications 1 à 5, **caractérisé en ce que** quatre valeurs de mesure pour l'épaisseur de l'objet sont mesurées par un quatrième système de mesure dont l'axe de mesure s'étend orthogonalement à l'axe du système de mesure central des trois systèmes de mesure, et **en ce que** les valeurs de mesure sont mises en relation, dans le calculateur, avec les valeurs de mesure des autres systèmes de mesure.

7. Procédé selon l'une quelconque des revendications 1 à 6, **caractérisé en qu**'une nouvelle recherche accélérée est effectuée si la relation des valeurs de mesure est approximativement identique sur une période prédéterminée.

8. Dispositif pour la mise en oeuvre du procédé selon l'une quelconque des revendications 1 à 7, comprenant
trois systèmes de mesure d'épaisseur (x, y, z) dont les axes de mesure sont décalés les uns par rapport aux autres d'un petit angle dans le sens circonférentiel de l'objet (22b),
un support commun pour les systèmes de mesure (x, y, z), logé en pivotement autour de l'axe longitudinal de l'objet (22b) et donc dans le sens circonférentiel de celui-ci,
un entraînement de positionnement angulaire pour faire pivoter le support, et
un calculateur disposé de telle sorte qu'il détermine des valeurs minimales ou maximales à partir des trois valeurs de mesure d'épaisseur respectives des trois systèmes de mesure (x, y, z), et qu'il calcule dans quelle mesure la position de la valeur minimale ou de la valeur maximale change dans le sens circonférentiel, quelle est la grandeur du minimum ou du maximum dans la position changée dans le sens circonférentiel et dans quel sens de rotation le changement de la position dans le sens circonférentiel a eu lieu.

9. Dispositif selon la revendication 8, **caractérisé en ce que** les axes de deux systèmes de mesure (y, z) sont disposés symétriquement à l'axe du troisième système de mesure (x).

10. Dispositif selon la revendication 8 ou 9, **caractérisé en ce que** l'angle entre les deux systèmes de mesure (y, z) et le troisième système de mesure (x) est compris entre 2° et 10°.

11. Dispositif selon l'une quelconque des revendications 8 à 10, **caractérisé en ce qu'**un quatrième système de mesure est disposé sur le support, comprenant un axe de mesure placé orthogonalement sur l'axe du troisième système de mesure (x).
